# EUROPEAN PATENT SPECIFICATION

(11) **EP 3 444 737 B1**
(45) Date of publication and mention of the grant of the patent: **16.11.2022**
(21) Application number: 17197386.0
(22) Date of filing: 19.10.2017
(51) Int. Cl.: G06F 21/56, G06F 9/455

(54) **SYSTEM AND METHOD OF EMULATING EXECUTION OF FILES**
SYSTEM UND VERFAHREN ZUR EMULATION DER AUSFÜHRUNG VON DATEIEN
SYSTÈME ET PROCÉDÉ D'ÉMULATION DE L'EXÉCUTION DE FICHIERS

(30) Priority: 17.08.2017 RU 2017129267; 12.10.2017 US 201715730958
(43) Date of publication of application: 20.02.2019
(73) Proprietor: AO Kaspersky Lab, Moscow 125212 (RU)
(72) Inventor: LISKIN, Alexander V., 125212 MOSCOW (RU); KRYLOV, Vladimir V., 125212 MOSCOW (RU)
(74) Representative: Chimini, Francesco

(56) References cited:
- US-A1- 2016 321 156
- US-B1- 9 038 184
- US-B1- 9 501 643

## Description

### FIELD OF TECHNOLOGY

The present disclosure relates generally to the field of emulation of the execution of files, specifically to a system and methods of emulating the execution of files.

### BACKGROUND

At present there is a broad variety of means for the development of executable files. Often during the development of software, especially when creating executable files, instructions different from machine instructions are placed in those files, such as instructions in the form of intermediate code (such as Common Intermediate Language, or CIL, instructions) or scripts.

When emulating the execution of files (such as Portable Executable, or PE, files) it is important to form as complete a log of function calls as possible. The completeness of such a log influences in particular the quality of detection of malicious files (such as the detection rate) when emulating their execution. When the executable file uses data or function types from dynamic libraries, the emulator carries out a number of steps of the operating system (OS) loader. For example, for executable files for the Windows OS, the emulator performs changes in the IAT (Import Address Table) section of the image of the executable file, relating to the fixing of the addresses of functions which need to be called during the execution of the file (and, accordingly, also during emulation of the execution). The emulator saves the information entered into the IAT as to the correspondence between the addresses of the functions and their names. Thus, when a certain function is called during the emulation of the execution of a file, the emulator determines that a certain library function has been called and changes the function call log appropriately.

But while emulating the execution of files which contain instructions different from machine instructions, no information at all is saved in the IAT on functions formalized in a way different from machine instructions, so that the problem arises of logging (recording the function calls in a log) of instructions, including also functions, formalized in a way different from machine instructions.

US 2016/0321156 A1 discloses a system and method for setting breakpoints (BPs) that cannot be detected by code being debugged so as to permit execution tracing and instrumentation of binaries, including malware. US 9 501 643 B1 discloses systems and methods to detect malicious executable files having a script language interpreter by combining a script emulator and a machine code emulator.

### SUMMARY

Thus, a system and method is disclosed herein for emulating the execution of files, and, more particularly, for systems and methods for emulating execution of files containing instructions different from machine instructions.

In one example, a system and a method for emulating execution of a file is provided. The method includes generating an image of a file, wherein the generated image is comprised of instructions read from the file, detecting at least one known set of instructions in a portion read from the file, wherein the detected at least one known set of instructions comprises an instruction set of an interpreter library configured to process instructions of the file different from machine instructions, generating an image of a library file of the interpreter library, inserting a break point into a position in the generated image of the file corresponding to a start of the detected at least one known set of instructions from the read portion of the file, and emulating execution of the file, the emulation comprising: emulating execution of instructions from the generated image of the file and from the generated image of the library file, wherein the emulation includes, in response to encountering the inserted break point, adding a record to the emulation log indicating emulation of the execution of the known set of instructions, emulating execution of an alternative set of instructions corresponding to the detected at least one known set of instructions, and refraining from emulating execution of the detected at least one known set of instructions, wherein the detected at least one known set of instructions comprises anti-emulation instructions configured to impede emulation of execution of the file, and wherein the alternative set of instructions corresponding to the anti-emulation instructions is configured to have a same result of emulating execution and not impede emulation of execution of the file, and adding corresponding records to an emulation log associated with the emulated execution of the at least one known set of instructions, wherein the emulating of the execution of a file is the imitation of the execution of a file on one device by means of another device or devices of a computer, and wherein the emulating of the execution of an instruction is the imitation of the execution of an instruction on one device by means of another device or devices of a computer.

In another example, the image of the file includes instructions of program code contained in the file and service information on entry points of the program code.

In another example, the alternative set of instructions consume less resources than the known set of instructions.

In another example, wherein the at least one known set of instructions in the portion read from the file is detected using one or more signatures from a database of known sets of instructions.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplarily pointed out in the claims.

### BRIEF DESCRIPTION OF DRAWINGS

The accompanying drawings, which are incorporated into and constitute a part of this specification, illustrate one or more example aspects of the present disclosure and, together with the detailed description, serve to explain their principles and implementations.
**Fig. 1** is a block diagram illustrating a system for emulating the execution of files.
**Fig. 2A** is a flowchart illustrating a method for emulating the execution of files.
**Fig. 2B** is a flowchart illustrating another method for emulating the execution of files.
**Fig. 3** is a block diagram of a general-purpose computer system on which the disclosed system and method can be implemented.

### DETAILED DESCRIPTION

Exemplary aspects are described herein in the context of a system, method, and computer program product for emulating the execution of files. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

The present disclosure shall introduce a number of terms will be used in the description of variant aspects of the present disclosure.

*Emulation* is the imitation of the functioning of one device by means of another device or devices of a computer, wherein the imitating device receives the same data, executes the same program, and achieves the same result as the imitated device.

*Emulating the execution of a file* is the imitation of the execution of a file on one device by means of another device or devices of a computer.

*Emulating the execution of an instruction* is the imitation of the execution of an instruction on one device by means of another device or devices of a computer. By instruction is meant an instruction of executable code which, in particular, may be contained in the executable file, as well as in the form of an executable file.

*The image of a file* is a representation of a file in the course of emulating its execution, specifically, the set of data describing the file at least with a completeness necessary for its execution (as well as the emulating of its execution). When emulating the execution of a file, the emulator (hardware or software) emulates the execution of instructions of the image of this file. The file instructions may be formalized in different ways: both in the form of machine instructions and in the form of intermediate code, e.g., Microsoft Intermediate Language (MSIL) or P-Code (portable code) instructions, or scripts, such instructions being machine instructions, intermediate code instructions, and script instructions, respectively.

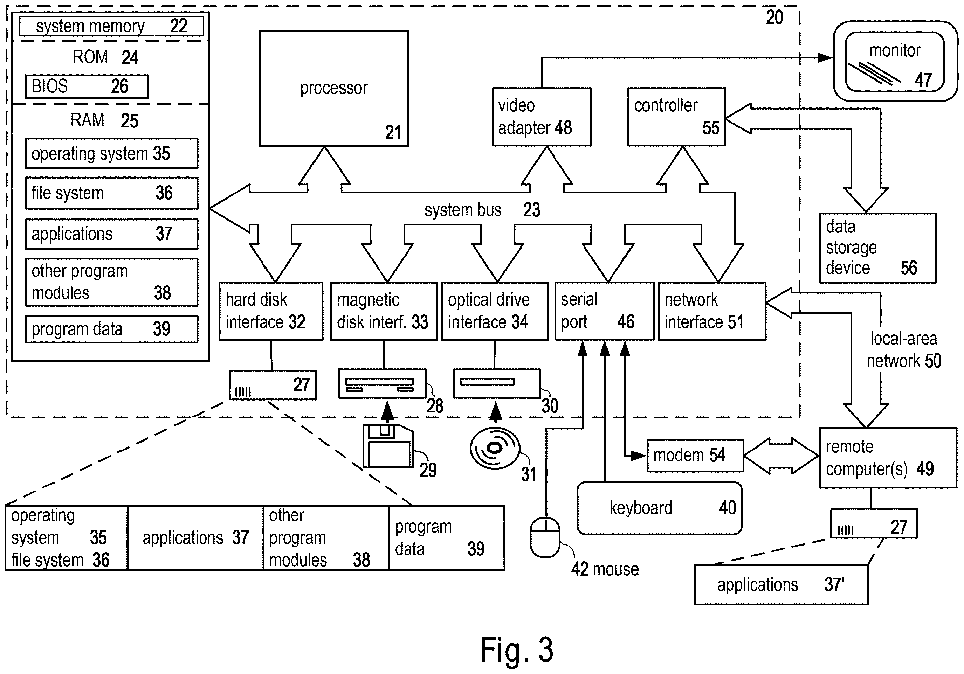

By the means of the system for emulating the execution of files in the present disclosure is meant actual devices, systems, components, groups of components realized with the use of hardware, such as integrated microcircuits (application-specific integrated circuit, ASIC) or a programmable gate array (field-programmable gate array, FPGA) or, for example, in the form of a combination of software and hardware, such as a microprocessor system and a set of software instructions, as well as neuromorphic chips (neurosynaptic chips). The functionality of such means of the system can be realized exclusively by hardware, and also in the form of a combination, where some of the functionality of the means of the system is realized by software, and some by hardware. In some examples, some of the means or all of the means may be implemented on the processor of a general-purpose computer (such as is described in **Fig. 3****).** The system components may be realized in the confines of a single computing device or distributed among several interconnected computing devices.

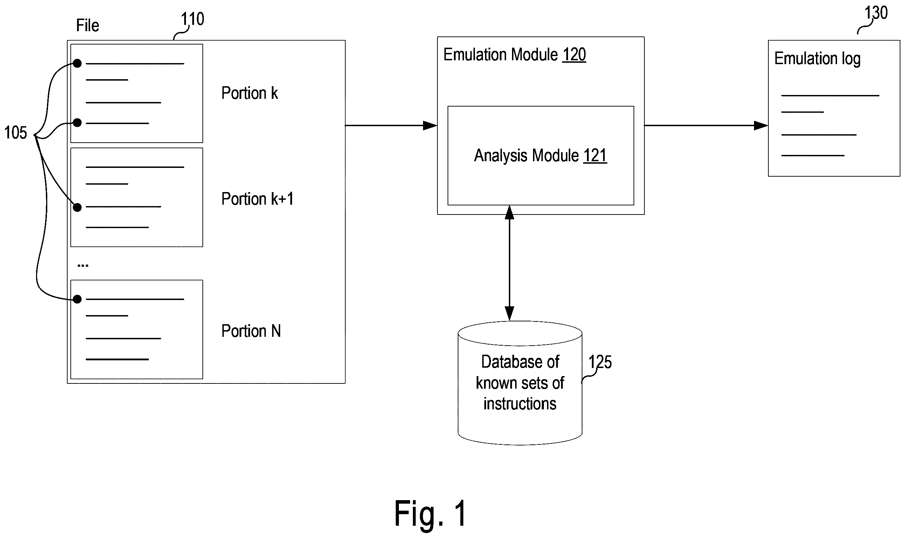

**Fig. 1** is a block diagram illustrating a system **100** for emulating the execution of files. The system **100** includes an emulation module **120,** an analysis module **121,** an emulation log **130,** and a database **125** configured to store known sets of instructions and/or known functions. The emulation module **120** is communicatively connected to the analysis module **121** and the emulation log **130.** The analysis module **121** is communicatively connected to the database **125** of known sets of instructions. In one example, the analysis module **121** is part of the emulation module **120.**

The emulation module **120** is configured to emulate the execution of a file **110.** In the general case, the file **110** is a file containing instructions. In one example, this file is an executable file of PE (portable executable) format, and the instructions contained in the file are machine instructions, which can be executed by a processor of the family x86, x86-64 or any other processor able to execute instructions for the processors of those families. In yet another example, the file **110** may contain instructions of other types, and also instructions of different types (for example, machine instructions and intermediate code instructions or scripts, also sometimes called scenarios). During the emulation of the execution of the file **110,** the emulation module **120** may form one or more emulation log(s) **130,** in which records of which known sets of instructions were emulated during the execution (for example, instructions of any given WinAPI functions) are placed. These records may be placed in the emulation log **130** either before the start of the emulation of the execution of the corresponding set of instructions or after the emulation of the execution.

The file **110** may be any file saved on a data storage device. In one example, this file **110** is saved on a data storage device of a computing device (such as a computer), on which also reside the components of the system for emulating the execution of files. In one example, this file **110** may be a file for which an antivirus scan is being performed with the use of heuristic rules which are applied to the results of the emulating of the execution of the file **110,** especially to the emulation log **130.** From the results of such an antivirus scan, the file **110** may be found to be malicious and be removed from the data storage device or placed in quarantine. Thus, yet another technical result may be accomplished - the enforcement of security of the computing device on whose data storage device the file **110** is being kept.

In order to carry out the emulation of the execution of a file **110** (as was noted before, this is the imitation of the execution of the file **110** on one device, such as an computing device, by means of another device-the emulation module **120),** the emulation module **120** forms an image of the file **110.** The file image is a representation of the file which is used by the emulation module **120** during the emulating of the execution of the file **110.**

In one example, the image of the file **110** is a set of data (which can be represented in the form of one or more data structures) containing information used for the emulating of its execution. The information used for the emulating of the execution of the file **110** includes service information, as well as instructions of the file **110** (instructions of the program code contained in the file **110).** An example of service information is information on the entry point (such as its relative virtual address, or RVA) and other data from the header of the file **110,** the content of the IAT (import address table), information on the location of the sections of the file **110,** and others. In one example, the service information is also a set of instructions (bounded either by the number of instructions, such as 100, or by the cumulative volume of bytes, such as one equal to the size of the portion of the file **110)** starting from the entry point. In one example, in order to form the image of the file **110,** the emulation module **120** imitates the functions of the loader of the operating system (OS) when creating the process in the OS. In this case, the image of the file **110** which is formed is a representation of the file **110** similar to the representation in the address space of the process which would be created from this file **110** by the means of the OS.

In order to form the image of the file **110,** the emulation module **120** reads the service information from the file **110.** The forming of the image of the file **110** also includes a step of reading from the file **110** and adding to the image of the file **110** the instructions of the file **110.** In one example, the emulation module **120** may read instructions from the file **110** and add them to the image of the file **110** in portions **105,** which may be of fixed size. In one example, the size of the portion **105** is chosen such as to read all the instructions of the file **110** at one time. In yet another example, the instructions of the file **110** are read by portions **105** several times as needed. In one example, the need to read the next portion **105** of the file **110** occurs when the emulation module **120** during the emulating of the execution of the instructions (from the image of the file **110** or the image of another file) accesses instructions or data absent from the image of the file **110** (that is, those instructions not yet read from the file **110),** for example, as a result of executing a conditional branch instruction. In one example, the size of such a portion **105** is 4 kb. In yet another example, the size of such a portion **105** is taken equal to the size of the cluster on the data storage device on which the file **110** is being kept. It should be noted that the emulating of the execution of instructions from the image of a file (already present in the image) **110** is possible even in the absence from the image of the file **110** of instructions not yet read (instructions present in not yet read portions of the file **110).** In one example, the first (and possibly the only) portion of the file **110** which contains the instructions of the file **110** and is read from the file **110** is the portion of the file **110** containing an instruction indicated by the file entry point.

After reading the portion of the file **110** by the emulation module **120,** the analysis module **121** detects known sets of instructions in the read portion of the file **110.** In the search for known sets of instructions, the analysis module **121** utilizes signatures (at least one) which are kept in a database **125** of known functions. Accordingly, in one example, each known set of instructions corresponds to at least one signature. In one example, the database **125** is part of the analysis module **121.** The signature may indicate the start of a certain known set of instructions. In one example, the signature may have the form of a series of bytes, a hash sum, or a bit/byte or any other mask. In yet another example, the signature may include a heuristic rule, the application of which to the set of instructions (or some of the instructions) of the file **110** makes it possible to detect a known set of instructions. The analysis module **121** uses the signatures from the database **125** of known sets of functions and with their help detects the start of known sets of instructions.

One example of known sets of instructions include the subprograms of static libraries. In one example, the static libraries are libraries of the development environment (libraries making up the development environment) of the file, for example, in Delphi language. Another example of known sets of instructions may include an instruction set of an interpreter file (for example, a library of an interpreter) configured to process (interpret) the instructions of scripts or intermediate code instructions. In some examples, the interpreter file is a library whose instructions (e.g., subprograms) are used to execute (interpret) instructions of the file **110** different from machine instructions (for example, if the file **110** contains script or intermediate code instructions). , The analysis module **121 detects** a known set of instructions impeding the emulating of the execution of the file, an anti-emulation set of instructions. For instance, such anti-emulation instructions include instructions whose execution performs a verification of the realization of certain WinAPI functions by the emulation module **120** and finishes the emulating of the execution of the file **110** if such functions have not been realized, or increases the time of emulation of the execution of the file **110.**

A signature of a known set of instructions may also contain an identifier, such as a symbolic name (for example, "string_comparison") or a check sum which is added to the record on the emulating of the execution of the known set of instructions which is formed during the emulating by the emulation module **120** and sent afterwards to the emulation log **130.**

After detection of known sets of instructions by the analysis module **121** in the read portion of the file **110,** the analysis module **121** sets in the corresponding image of the file **110** break points at the start of the known sets of instructions in the image of the file **110.** The break points are set at places in the image of the file **110** which are placed in the mentioned image by reading the aforementioned portion of the file **110.** Break points are used by the emulation module **120** to determine the time of formation of the record on the emulation of the execution of a known set of instructions and the placing of this record in the emulation log **130.**

The emulation module **120** performs the emulating of the execution of the instructions from the image of the file **110.** As mentioned above, in the process of the emulation, the execution of the instructions is imitated; in particular, the execution of the instructions on an actual processor (physical processor) is imitated. In the course of the emulation, the emulation module **120** generates the emulation log **130.**

In one example, the emulation module **120** adds, to the emulation log **130,** records on the calling of subprograms and instructions (in other words, executable code) which are contained in dynamic libraries (for example, those which are loaded into the address space of the process launched from the file **110** when executing the file **110** on an actual computing device). In one example, such records are added to the emulation log **130** when emulating the execution of a subprogram call instruction (for example, this is a *call* instruction in assembler language), where the address at which the instructions of the subprogram are supposed to be located is the address for one of the IAT records. Accordingly, there is added to the emulation log **130** a record on the emulation of the known set of instructions - a subprogram - as referenced by the record from the IAT. In one example, this record further includes the identifier of the known set of instructions, such as its symbolic name, such as fwrite, GetProcAddress, or others.

In yet another example of the present disclosure, the emulation module **120** may add, to the emulation log **130,** a record on the emulating of the execution of the known set of instructions if, in the process of emulating the execution of instructions from the image of the file **110,** the emulation module **120** reaches a break point. The emulation module **120** imitates the transfer of control from a particular instruction to an instruction in which a break point is set. As mentioned earlier, the break point is set in the image of the file **110** at the start of the known set of instructions by the analysis module **121** upon detecting this known set of instructions with the help of a signature from the database **125.**

If in the process of emulation by the emulation module **120** it becomes necessary to read the next portion **105** of the file **110,** the reading of this portion **105** from the file **110** is done and the steps described above are repeated (for example, the detection of known sets of instructions and setting break points), and the image of the file **110** is refreshed by the emulation module **120** by adding to it the read portion **105** of the file **110.** After this, the process of emulating the execution of the instructions of the file **110** continues with the scenario described above.

When the emulation module **120** reaches a certain break point set at the start of a known set of instructions, the emulation module **120** adds the corresponding record to the emulation log **130,** but no emulation is done for the execution of this known set of instructions the emulation module refrains from emulating the execution). Instead, the emulation module **120** emulates the execution of another, alternative set of instructions. In one example, the database **125** may contain an alternative set of instructions for every known set of instructions.

In one example, the alternative set of instructions which corresponds to a certain known set of instructions is an optimized set of instructions: the result of emulating the execution (for example, the change in state of the device being imitated - RAM, ROM, or the value of the registers of the processor) of that set of instructions will be the same as when emulating the execution of the known set of instructions, but the emulating of the execution of that alternative set of instructions will use less requires, e.g., take less time or require a smaller volume of RAM or processor registers. The emulating of the execution of such a set of instructions in place of the known set of instructions will make it possible to speed up the process of emulating the execution of the file **110** and shorten the time for the emulating of the execution of the file **110.**

The alternative set of instructions corresponding to a certain known set of anti-emulation instructions is a set of instructions which does not impede the emulating of the execution of the file (as compared to the known set): the result of the emulating of the execution (for example, the change in state of the device being imitated - RAM, ROM, or the value of the registers of the processor) of this set of instructions will be the same as in the emulating of the execution of the known set of instructions, however there will be no emulating of the set of anti-emulation instructions (which might impede the emulating of the execution of the file **110).** The emulation of the execution of this set of instructions in place of the known set of instructions (which in a given case impedes the emulating of the execution of the file **110)** will allow in certain cases (when the known set of instructions contains instructions impeding emulation) a speeding up of the process of emulating the execution of the file **110** and a shortening of the time for emulating the execution of the file **110.** In some instances, this approach will enable the formation of an emulation log **130** which is reliable in terms of completeness of information: the log **130** formed in this way will contain more records on the emulating of the execution of known sets of instructions, since the emulating of the execution of the instructions of the file **110** will not be prevented by the known sets of instructions which impede emulation.

In one example, the data kept in the database **125** is placed in the database **125** by an expert, especially an expert in the field of computer technology. In one example, such data may be sent via a network, such as the Internet, from a server (e.g., third-party server) to the analysis module **121,** which will save the data received in the database **125.**

In one example, the emulation module **120** can additionally generate images of other files (by performing the same steps as those taken for the file **110).** In some examples, such files are the files needed for emulating the execution of the instructions of the file **110** - for example, the files of dynamic libraries which can be used during the execution (and accordingly the emulating of the execution) of the instructions of the file **110.** The files of dynamic libraries may include the files of libraries of the interpreters of the instructions of the file **110,** if the file **110** contains not only machine instructions, but also instructions of another kind (such as instructions in the form of a script; such a file shall be called a file containing instructions different from machine instructions). The instructions of such files of libraries (and accordingly the separate sets of instructions) of interpreters are used for interpreting instructions different from machine instructions. The emulation module **120** emulates the execution of the instructions from the images of the other files, if a transfer of control (an emulation of the transfer of control) has occurred from an instruction of the image of the file **110** to an instruction in the image of the other file. For example, a transfer of control may occur by calling a subprogram whose instructions are present in the image of the other file, for example, by emulating the execution of a *call or jmp* instruction. It should be noted that, formally, the transfer of control will be implemented only after the image of the other file has been formed. In one example, the process of emulation of the execution of instructions from the image of the file **110** includes the emulation of the execution of instructions from the image of the other file, and accordingly when emulating the execution of the instructions from the image of the other file records as to the emulation of known sets of instructions contained in the image of the other file will also be added to the emulation log **130.**

It should be noted that the additional formation of images of files is done only when necessary, for example, when during the emulating of the execution of the file **110** it is necessary to read data from another file or emulate the execution of instructions from the image of the other file, for example, when emulating the execution of an instruction (present in the image of the file **110)** to call a subprogram, a branch instruction (such as an unconditional jump), or other circumstances of the transfer of control to instructions from the image of the other file. The process of formation of images of such files is similar to that described above. Therefore, all the steps of the method in the context of the present disclosure invention may be applied not only to the file **110,** but also to the other files needed for the emulation of the file **110.**

In one example, the file needed for the emulation of the execution of the instructions of the file **110** is a library file of the interpreter of instructions of the file **110.** An example of such a library file is a module for Microsoft Visual Basic virtual machines, the file msvbvm60.dll. As an example, one may give the following known set of instructions (supplemented by code in the assembler language and by the names of certain memory addresses) of this file msvbvm60.dll from the instructions for the realization (in other words, intended for processing - or interpretation - of instructions other than machine instructions) of the intermediate P-code subprogram, namely LitStr:

| | |
|---|---|
| E8 6C 9F F2 FF | (call _vbaStrVarCopy(x)) |
| 50 | push eax |
| 33 C0 | xor eax, eax |
| 8A 06 | mov al, [esi] |
| 46 | inc esi |
| FF 24 85 58 FA 4D 73 jmp ds:VM_Table[eax^{∗}4] | |

Moreover, for this known set of instructions, the database **125** will keep its identifier "push <constant string>", which means that when it is executed (and accordingly when its execution is emulated) a pointer to the string will be placed in the stack. When emulating the execution of this set of instructions, the emulation module **120** will add to the emulation log **130** a corresponding record indicating the identifier of the known set of instructions. It should be noted that when emulating the execution of a certain known set of instructions, the emulation module **120** may also add other information to the records which are placed in the emulation log as to the course of the emulation: the contents of the registers being imitated, the arguments of the subprograms called, and so on. With the help of the above-described method, the technical problem is solved: the formation of an emulation log for files which contain instructions in a form other than that of machine instructions (in other words, different from machine instructions), such as instructions in the form of scripts or in the form of intermediate code. Such an emulation method makes it possible to achieve the technical result in the form of an emulation of the execution of a file which contains instructions in a form different from the form of machine instructions, by emulating the execution of interpreter library files.

In one example, setting the break points for the images of interpreter library files is done one time (since the set of instructions of such files is generally unchanged), and then information on the set break points is kept in the analysis module **121** and used to detect known sets of instructions without using the signatures of the known sets of instructions.

The emulation module **120** may be configured to halt the process of emulation of the execution of the file **110.** In one example, the emulation module may halt the process of emulation upon expiration of an established emulation time, such as 10 seconds. In yet example, the emulation module may halt the process of emulation in response to emulating the execution of an instruction for an interrupt call or an execution completion function.

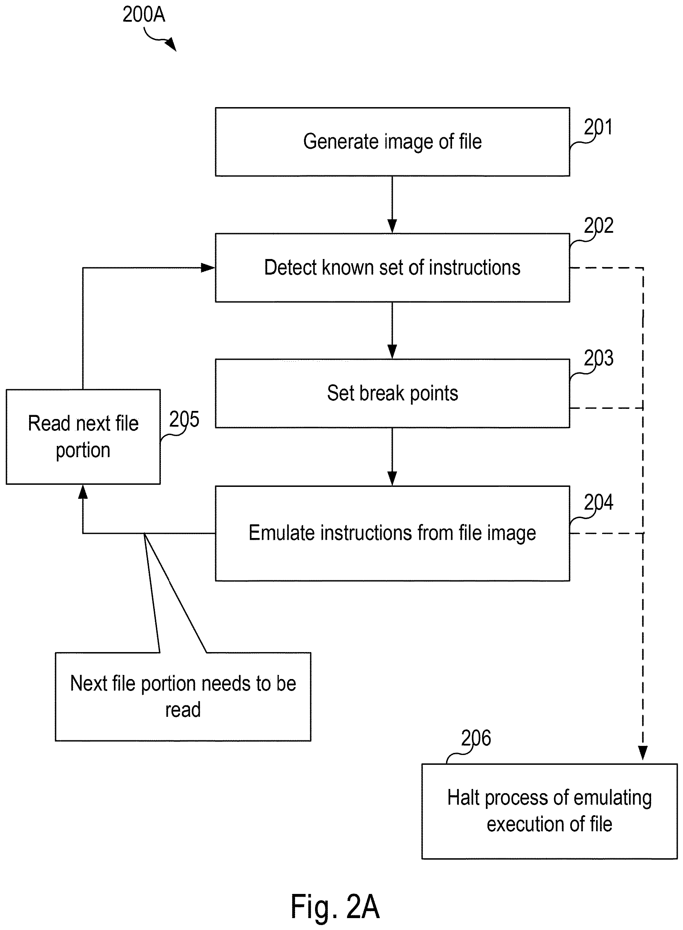

**Fig. 2A** is a flowchart illustrating a method **200A** for emulating the execution of files. In step **201,** the emulation module forms the image of the file **110.** This step also includes the reading of the portion **105** of the file **110.** As such, the emulation module generates an image of a file comprised of instructions read from the file. In some examples, the image of the file includes instructions of program code contained in the file and service information on entry points of the program code. In some examples, the emulation module **120** may generate an image of a library file of an interpreter of instructions of the file.

Next, in step **202,** the analysis module **121** detects at least one known set of instructions in the portion **105** of the file **110** read by the emulation module **120.** The detection may be done with the aid of signatures from a database **125** of known sets of instructions. In one example, the detected at least one known set of instructions may be instructions having corresponding optimized instructions. The detected at least one known set of instructions includes anti-emulation instructions configured to impede emulation of execution of the file. In some examples, the detected at least one known set of instructions may include an instruction set of an interpreter library configured to process instructions of the file different from machine instructions. In step **203** the analysis module **121** sets break points in the formed image of the file 110 at places (positions) corresponding to the starts of all the detected known sets of instructions from the read portion **105** of the file **110.**

After this, in step **204,** the emulation module **120** performs the emulation of the execution of the instructions from the image of the file **110,** adding to the emulation log **130** the corresponding records about the emulation of the execution of the known sets of instructions. In some examples, in the process of emulating the execution of the instructions from the iamge of the file, the emulation module 120 may, in response to encountering an inserted break point, add a record to the emulation log indicating emulation of the execution of the known set of instructions, and emulate execution of an alternative set of instructions corresponding to the detected at least one known set of instructions (that is, refrain from emulating execution of the detected at least one known set of instructions). In some examples, the alternative set of instructions may include an optimized set of instructions configured to have the same result of emulating execution and consume less resources than the known set of instructions. The alternative set of instructions corresponding to the anti-emulation instructions configured to have the same result of emulating execution and does not impede emulation of execution of the file.

If in step **204** in the process of emulating the execution of the instructions from the image of the file **110** it becomes necessary to read the next portion **105** of the file **110,** the emulation module **120** in step **205** reads the next portion **105** of the file **110,** after which steps **202-205 (205** only if necessary) are repeated. The emulation module may halt (finish) the process of emulating the execution of the file **110** in step **206** (the halting may occur at the moment of performing any one of steps **202-205,** the transition is indicated by broken lines), for example, upon lapsing of the established emulation time.

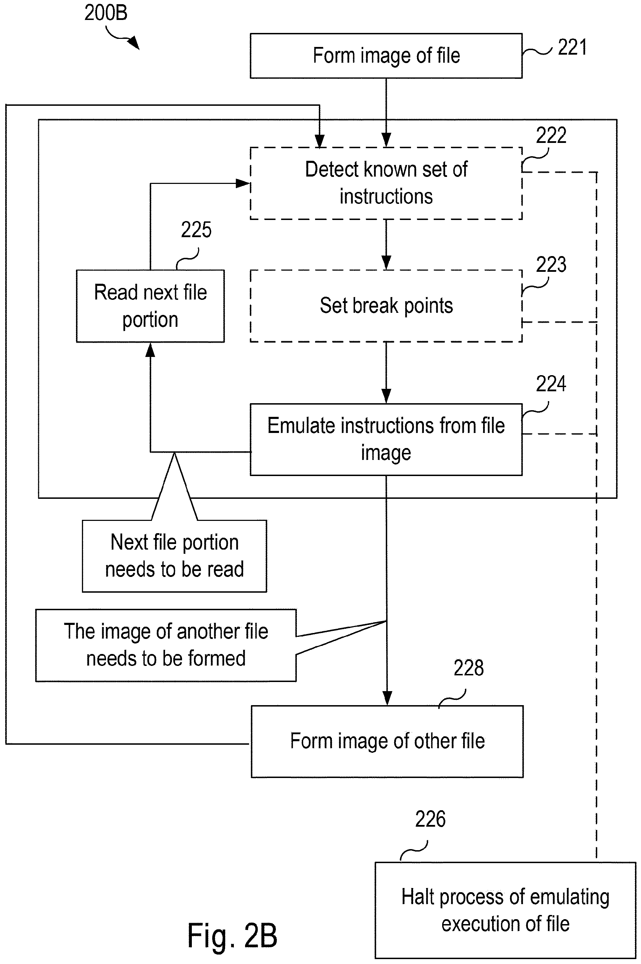

**Fig. 2B** is a flowchart illustrating a method **200B** for emulating the execution of files. In step **221** the emulation module **120** forms the image of the file **110.** This step also includes the reading of the portion **105** of the file **110.** Next, in step **222,** the analysis module **121** detects at least one known set of instructions in the portion **105** of the file **110** read by the emulation module **120.** The detection may be done with the aid of signatures from a database **125** of known sets of instructions. In step **223,** the analysis module **121** sets break points in the formed image of the file **110** at places corresponding to the starts of all the detected known sets of instructions from the read portion **105** of the file **110.** After this, in step **224,** the emulation module **120** performs the emulation of the execution of the instructions from the image of the file **110,** adding to the emulation log **130** the corresponding records about the emulation of the execution of the known sets of instructions. If in step **224** in the process of emulating the execution of the instructions from the image of the file **110** it becomes necessary to read the next portion **105** of the file **110,** the emulation module **120** in step **225** reads the next portion **105** of the file **110,** after which steps **222-225 (225** only if necessary) are repeated.

If in the process of emulating the execution of instructions from the image of the file **110** it became necessary to perform an emulation of the execution of an instruction from the image of another file, the emulation module **120** forms the image of this other file in step **228.** The step **228** of forming the image of the other file is similar to step **221.** After this, the steps **222-225** are performed with regard to the other file. During the emulating of the execution of the instructions from the image of the other file it may likewise become necessary to emulate the execution of an instruction from the image of yet another file. In this case, steps **228, 222-225** are repeated by analogy with the scenario described above. The emulation module may halt (finish) the process of emulating the execution of the file **110** in step **226** (the halting may occur at the moment of performing any one of steps **222-225,** the transition is indicated by broken lines), for example, upon lapsing of the established emulation time.

In one example, the need to emulate the execution of instructions from another file, and specifically from the image of another file, and accordingly the need to form an image of the other file, arises when the file 110 and accordingly the image of this file **110** contains instructions different from machine instructions, and it becomes necessary to emulate the execution of an instruction from the image of the other file which is an interpreter (library) file, and the emulating of the execution of the instructions from that image of a file is necessary for the interpreting of instructions different from machine instructions in the image of the file **110.** For example, the image of the file **110** contains a CIL code, and during the emulating of the execution of the instructions from the image of the file **110** the emulation module **120** needs to perform an emulation of the calling of the function _coreexemain, it becomes necessary to emulate the execution of the instructions of the other file image, in particular, the file image MSCoreEE.dll, and consequently control is transferred from the image of the file **110** to the execution environment .NET (the image of the file MSCoreEE.dll). When such a need arises, the emulation module **120** forms the image of the interpreter file, especially the file MSCoreEE.dll, and begins the emulation of the execution of instructions from the image of this file, and during the emulating of the execution of the instructions of the function _coreexemain from the image of the file MSCoreEE.dll there will be performed an emulation of the instructions which are designed for the interpreting (processing) of the CIL code from the image of the file **110.** In another example, the known set of instructions is a set of instructions of the interpreter (library) file (MSCoreEE.dll), and accordingly also the instructions of the image of this file, which is designed for the processing (interpreting) of instructions (CIL code) different from the machine instructions contained in the image of the file **110.**

In one example, steps **222** and **223** involving the file **110** are skipped, and accordingly during the emulation of the execution of the file **110** no records will be added to the emulation log **130** as to the emulating of the execution of the known set of instructions from the file **110,** and only records on the emulating of the execution of the known sets of instructions from the image of the other file will be added, in particular the image formed in step **228.**

**Fig. 3** is a block diagram illustrating a general-purpose computer system **20** on which aspects of systems and methods for emulating an execution of a file may be implemented. It should be noted that the computer system **20** can correspond to the system **100,** for example, described earlier.

As shown, the computer system **20** (which may be a personal computer or a server) includes a central processing unit **21,** a system memory **22,** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20,** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the computer system **20.**

An exemplary embodiment comprises a system that uses a hard disk **27,** a removable magnetic disk **29** and a removable optical disk **31** connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35,** may be stored, as well as additional program applications **37,** other program modules **38,** and program data **39.** A user of the computer system **20** may enter commands and information using keyboard 40, mouse 42, or any other input device known to those of ordinary skill in the art, such as, but not limited to, a microphone, joystick, game controller, scanner, *etc.* Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are non-limiting examples of numerous well-understood ways of establishing a connection by one computer to another using communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 3, above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

## Claims

1. A method for emulating an execution of a file (110), wherein the method comprises:
generating (201; 221) an image of a file (110), wherein the generated image is comprised of instructions read from the file;
detecting (202; 222) at least one known set of instructions in a portion (105) read from the file, wherein the detected at least one known set of instructions comprises an instruction set of an interpreter library configured to process instructions of the file different from machine instructions;
generating (228) an image of a library file of the interpreter library;
inserting (203; 223) a break point into a position in the generated image of the file corresponding to a start of the detected at least one known set of instructions from the read portion of the file; and
emulating (204; 224) execution of the file, the emulation comprising:
emulating execution of instructions from the generated image of the file and from the generated image of the library file wherein the emulation includes, in response to encountering the inserted break point, adding a record to the emulation log indicating emulation of the execution of the known set of instructions, emulating execution of an alternative set of instructions corresponding to the detected at least one known set of instructions, and refraining from emulating execution of the detected at least one known set of instructions, wherein the detected at least one known set of instructions comprises anti-emulation instructions configured to impede the emulation of the execution of the file, and
wherein the alternative set of instructions corresponding to the anti-emulation instructions is configured to have the same result of emulating the execution of the at least one known set of instructions and does not impede emulation of
execution of the file, and
adding corresponding records to an emulation log (130) associated with the emulated execution of the at least one known set of instructions, wherein the emulating of the execution of a file is the imitation of the execution of a file on one device by means of another device or devices of a computer, and wherein the emulating of the execution of an instruction is the imitation of the execution of an instruction on one device by means of another device or devices of a computer.

2. The method of claim 1, wherein the image of the file includes instructions of program code contained in the file and service information on entry points of the program code.

3. The method according to claim 1, wherein the alternative set of instructions consume less resources than the known set of instructions.

4. The method according to any of claims 1 to 3, wherein the at least one known set of instructions in the portion read from the file is detected using one or more signatures from a database of known sets of instructions.

5. A system for emulating an execution of a file, the system comprising:
a storage device configured to store a file, an image of a file, and an emulation log; and
a hardware processor configured to:
generate the image of the file, wherein the generated image is comprised of instructions read from the file;
detect at least one known set of instructions in a portion read from the file, wherein the detected at least one known set of instructions comprises an instruction set of an interpreter library configured to process instructions of the file different from machine instructions;
generate an image of a library file of the interpreter library;
insert a break point into a position in the generated image of the file corresponding to a start of the detected at least one known set of instructions from the read portion of the file; and
emulate execution of the file, the emulation comprising: emulating execution of instructions from the generated image of the file and from the generated image of the library file, wherein the emulation includes, in response to encountering the inserted break point, adding a record to the emulation log indicating emulation of the execution of the known set of instructions, emulating execution of an alternative set of instructions corresponding to the detected at least one known set of instructions, and refraining from emulating execution of the detected at least one known set of instructions, wherein the detected at least one known set of instructions comprises anti-emulation instructions configured to impede the emulation of the execution of the file, and wherein the alternative set of instructions corresponding to the anti-emulation instructions is configured to have the same result of emulating the execution of the at least one known set of instructions and does not impede emulation of execution of the file, and
adding corresponding records to an emulation log associated with the emulated execution of the at least one known set of instructions, wherein the emulating of the execution of a file is the imitation of the execution of a file on one device by means of another device or devices of a computer, and wherein the emulating of the execution of an instruction is the imitation of the execution of an instruction on one device by means of another device or devices of a computer.

6. The system according to claim 5, wherein the image of the file includes instructions of program code contained in the file and service information on entry points of the program code.

7. The system according to claim 5, wherein the alternative set of consume less resources than the known set of instructions.

8. The system according to any of claims 5 to 7, wherein the at least one known set of instructions in the portion read from the file is detected using one or more signatures from a database of known sets of instructions.

## Patentansprüche

1. Verfahren zur Emulation einer Ausführung einer Datei (110), wobei das Verfahren umfasst:
Erzeugen (201; 221) eines Abbilds einer Datei (110), wobei das erzeugte Abbild Befehle aufweist, die aus der Datei ausgelesen werden;
Detektieren (202; 222) mindestens eines bekannten Befehlssatzes in einem aus der Datei ausgelesenen Teil (105), wobei der detektierte mindestens eine bekannte Befehlssatz einen Befehlssatz einer Interpreter-Bibliothek aufweist, der zur Verarbeitung von Befehlen der Datei konfiguriert ist, die sich von Maschinenbefehlen unterscheiden;
Erzeugen (228) eines Abbilds einer Bibliotheksdatei der Interpreter-Bibliothek;
Einfügen (203; 223) eines Haltepunkts in eine Position in dem erzeugten Abbild der Datei, die einem Anfang des detektierten mindestens einen bekannten Befehlssatzes aus dem gelesenen Teil der Datei entspricht; und
Emulieren (204; 224) der Ausführung der Datei, wobei die Emulation umfasst:
Emulieren der Ausführung von Befehlen aus dem erzeugten Abbild der Datei und aus dem erzeugten Abbild der Bibliotheksdatei, wobei die Emulation als Reaktion auf das Antreffen des eingefügten Haltepunkts Hinzufügen eines Eintrags zu dem Emulationsprotokoll, der die Emulation der Ausführung des bekannten Befehlssatzes anzeigt, Emulieren der Ausführung eines alternativen Befehlssatzes, der dem detektierten mindestens einen bekannten Befehlssatz entspricht, und Nichtemulieren der Ausführung des detektierten mindestens einen bekannten Befehlssatzes umfasst, wobei der detektierte mindestens eine bekannte Befehlssatz Anti-Emulations-Befehle aufweist, die zum Behindern der Emulation der Ausführung der Datei konfiguriert sind, und
wobei der alternative Befehlssatz, der den Anti-Emulations-Befehlen entspricht, so konfiguriert ist, dass er das gleiche Ergebnis des Emulierens der Ausführung des mindestens einen bekannten Befehlssatzes aufweist und die Emulation der Ausführung der Datei nicht behindert, und
Hinzufügen entsprechender Einträge zu einem der emulierten Ausführung des mindestens einen bekannten Befehlssatzes zugeordneten Emulationsprotokoll (130), wobei das Emulieren der Ausführung einer Datei die Imitation der Ausführung einer Datei auf einer Vorrichtung mittels einer weiteren Vorrichtung bzw. weiterer Vorrichtungen eines Computers ist und wobei das Emulieren der Ausführung eines Befehls die Imitation der Ausführung eines Befehls auf einer Vorrichtung mittels einer weiteren Vorrichtung bzw. weiterer Vorrichtungen eines Computers ist.

2. Verfahren nach Anspruch 1, wobei das Abbild der Datei Befehle aus in der Datei enthaltenem Programmcode und Dienstinformationen über Einsprungstellen des Programmcodes umfasst.

3. Verfahren nach Anspruch 1, wobei der alternative Befehlssatz weniger Ressourcen als der bekannte Befehlssatz verbraucht.

4. Verfahren nach einem der Ansprüche 1 bis 3, wobei der mindestens eine bekannte Befehlssatz in dem aus der Datei ausgelesenen Teil mithilfe von einer oder mehreren Signaturen aus einer Datenbank bekannter Befehlssätze detektiert wird.

5. System zur Emulation einer Ausführung einer Datei, wobei das System aufweist:
eine Speichervorrichtung, die zum Speichern einer Datei, eines Abbilds einer Datei und eines Emulationsprotokolls konfiguriert ist; und
einen Hardware-Prozessor, der konfiguriert ist zum:
Erzeugen des Abbilds der Datei, wobei das erzeugte Abbild Befehle aufweist, die aus der Datei ausgelesen werden;
Detektieren mindestens eines bekannten Befehlssatzes in einem aus der Datei ausgelesenen Teil, wobei der detektierte mindestens eine bekannte Befehlssatz einen Befehlssatz einer Interpreter-Bibliothek aufweist, der zur Verarbeitung von Befehlen der Datei konfiguriert ist, die sich von Maschinenbefehlen unterscheiden;
Erzeugen eines Abbilds einer Bibliotheksdatei der Interpreter-Bibliothek;
Einfügen eines Haltepunkts in eine Position in dem erzeugten Abbild der Datei, die einem Anfang des detektierten mindestens einen bekannten Befehlssatzes aus dem ausgelesenen Teil der Datei entspricht; und
Emulieren (204; 224) der Ausführung der Datei, wobei die Emulation umfasst: Emulieren der Ausführung von Befehlen aus dem erzeugten Abbild der Datei und aus dem erzeugten Abbild der Bibliotheksdatei, wobei die Emulation als Reaktion auf das Antreffen des eingefügten Haltepunkts Hinzufügen eines Eintrags zu dem Emulationsprotokoll, der die Emulation der Ausführung des bekannten Befehlssatzes anzeigt, Emulieren der Ausführung eines alternativen Befehlssatzes, der dem detektierten mindestens einen bekannten Befehlssatz entspricht, und Nichtemulieren der Ausführung des detektierten mindestens einen bekannten Befehlssatzes umfasst, wobei der detektierte mindestens eine bekannte Befehlssatz Anti-Emulations-Befehle aufweist, die zum Behindern der Emulation der Ausführung der Datei konfiguriert sind, und wobei der alternative Befehlssatz, der den Anti-Emulations-Befehlen entspricht, so konfiguriert ist, dass er das gleiche Ergebnis des Emulierens der Ausführung des mindestens einen bekannten Befehlssatzes aufweist und die Emulation der Ausführung der Datei nicht behindert, und
Hinzufügen entsprechender Einträge zu einem der emulierten Ausführung des mindestens einen bekannten Befehlssatzes zugeordneten Emulationsprotokoll, wobei das Emulieren der Ausführung einer Datei die Imitation der Ausführung einer Datei auf einer Vorrichtung mittels einer weiteren Vorrichtung bzw. weiterer Vorrichtungen eines Computers ist und wobei das Emulieren der Ausführung eines Befehls die Imitation der Ausführung eines Befehls auf einer Vorrichtung mittels einer weiteren Vorrichtung bzw. Vorrichtungen eines Computers ist.

6. System nach Anspruch 5, wobei das Abbild der Datei Befehle aus in der Datei enthaltenem Programmcode und Dienstinformationen über Einsprungstellen des Programmcodes umfasst.

7. System nach Anspruch 5, wobei der alternative Satz weniger Ressourcen verbraucht als der bekannte Befehlssatz.

8. System nach einem der Ansprüche 5 bis 7, wobei der mindestens eine bekannte Befehlssatz in dem aus der Datei ausgelesenen Teil mithilfe von einer oder mehreren Signaturen aus einer Datenbank bekannter Befehlssätze detektiert wird.

## Revendications

1. Procédé pour une émulation d'une exécution d'un fichier (110), dans lequel le procédé comprend :
une génération (201 ; 221) d'une image d'un fichier (110), dans lequel l'image générée est composée d'instructions lues à partir du fichier ;
une détection (202 ; 222) d'au moins un jeu d'instructions connu dans une partie (105) lue à partir du fichier, dans lequel l'au moins un jeu d'instructions connu détecté comprend un jeu d'instructions d'une bibliothèque d'interprétation configurée pour traiter des instructions du fichier différentes d'instructions machine ;
une génération (228) d'une image d'un fichier de bibliothèque de la bibliothèque d'interprétation ;
une insertion (203 ; 223) d'un point d'interruption à une position dans l'image générée du fichier correspondant à un début de l'au moins un jeu d'instructions connu détecté provenant de la partie lue du fichier ; et
une émulation (204 ; 224) d'une exécution du fichier, l'émulation comprenant :
une émulation d'une exécution d'instructions provenant de l'image générée du fichier et provenant de l'image générée du fichier de bibliothèque dans lequel l'émulation inclut, en réponse à une rencontre du point d'interruption inséré, l'ajout d'un enregistrement au journal d'émulation indiquant une émulation de l'exécution du jeu d'instructions connu, une émulation d'une exécution d'un jeu d'instructions de remplacement correspondant à l'au moins un jeu d'instructions connu détecté, et le fait d'empêcher une émulation d'une exécution de l'au moins un jeu d'instructions connu détecté, dans lequel l'au moins un jeu d'instructions connu détecté comprend des instructions anti-émulation configurées pour bloquer l'émulation de l'exécution du fichier, et
dans lequel le jeu d'instructions de remplacement correspondant aux instructions anti-émulation est configuré pour avoir le même résultat d'émulation de l'exécution de l'au moins un jeu d'instructions connu et ne bloque pas une émulation d'une exécution du fichier, et
un ajout d'enregistrements correspondant à un journal d'émulation (130) associé à l'exécution émulée de l'au moins un jeu d'instructions connu, dans lequel l'émulation de l'exécution d'un fichier est une imitation de l'exécution d'un fichier sur un dispositif au moyen d'un autre dispositif ou d'autres dispositifs d'un ordinateur, et dans lequel l'émulation de l'exécution d'une instruction est l'imitation de l'exécution d'une instruction sur un dispositif au moyen d'un autre dispositif ou d'autres dispositifs d'un ordinateur.

2. Procédé selon la revendication 1, dans lequel l'image du fichier inclut des instructions de code de programme contenues dans le fichier et des informations de service sur des points d'entrée du code de programme.

3. Procédé selon la revendication 1, dans lequel le jeu d'instructions de remplacement consomme moins de ressources que le jeu d'instructions connu.

4. Procédé selon l'une quelconque des revendications 1 à 3, dans lequel l'au moins un jeu d'instructions connu dans la partie lue à partir du fichier est détecté en utilisant une ou plusieurs signatures provenant d'une base de données de jeux d'instructions connus.

5. Système pour une émulation d'une exécution d'un fichier, le système comprenant :
un dispositif de stockage configuré pour stocker un fichier, une image d'un fichier et un journal d'émulation ; et
un processeur matériel configuré pour :
générer l'image du fichier, dans lequel l'image générée est composée d'instructions lues à partir du fichier ;
détecter au moins un jeu d'instructions connu dans une partie lue à partir du fichier, dans lequel l'au moins un jeu d'instructions connu détecté comprend un jeu d'instructions d'une bibliothèque d'interprétation configurée pour traiter des instructions du fichier différentes d'instructions machine ;
générer une image d'un fichier de bibliothèque de la bibliothèque d'interprétation ;
insérer un point d'interruption à une position dans l'image générée du fichier correspondant à un début de l'au moins un jeu d'instructions connu détecté provenant de la partie lue du fichier ; et
émuler une exécution du fichier, l'émulation comprenant : l'émulation d'une exécution d'instructions provenant de l'image générée du fichier et provenant de l'image générée du fichier de bibliothèque, dans lequel l'émulation inclut, en réponse à une rencontre du point d'interruption inséré, l'ajout d'un enregistrement au journal d'émulation indiquant une émulation de l'exécution du jeu d'instructions connu, une émulation d'une exécution d'un jeu d'instructions de remplacement correspondant à l'au moins un jeu d'instructions connu détecté, et le fait d'empêcher une émulation d'une exécution de l'au moins un jeu d'instructions connu détecté, dans lequel l'au moins un jeu d'instructions connu détecté comprend des instructions anti-émulation configurées pour bloquer l'émulation de l'exécution du fichier, et dans lequel le jeu d'instructions de remplacement correspondant aux instructions anti-émulation est configuré pour avoir le même résultat d'émulation de l'exécution de l'au moins un jeu d'instructions connu et ne bloque pas une émulation d'une exécution du fichier, et
l'ajout d'enregistrements correspondant à un journal d'émulation associé à l'exécution émulée de l'au moins un jeu d'instructions connu, dans lequel l'émulation de l'exécution d'un fichier est une imitation de l'exécution d'un fichier sur un dispositif au moyen d'un autre dispositif ou d'autres dispositifs d'un ordinateur, et dans lequel l'émulation de l'exécution d'une instruction est l'imitation de l'exécution d'une instruction sur un dispositif au moyen d'un autre dispositif ou d'autres dispositifs d'un ordinateur.

6. Système selon la revendication 5, dans lequel l'image du fichier inclut des instructions de code de programme contenues dans le fichier et des informations de service sur des points d'entrée du code de programme.

7. Système selon la revendication 5, dans lequel le jeu de remplacement consomme moins de ressources que le jeu d'instructions connu.

8. Système selon l'une quelconque des revendications 5 à 7, dans lequel l'au moins un jeu d'instructions connu dans la partie lue à partir du fichier est détecté en utilisant une ou plusieurs signatures provenant d'une base de données de jeux d'instructions connus.
